Europäisches Patentamt

European Patent Office

Office européen des brevets

(11) Publication number: 0 495 311 A1

# EUROPEAN PATENT APPLICATION

(21) Application number: 91311879.0

(22) Date of filing: 20.12.91

(51) Int. Cl.5: F16D 65/16, F16D 65/56, F16D 55/227

(30) Priority: 16.01.91 GB 9100944

(43) Date of publication of application: 22.07.92 Bulletin 92/30

(84) Designated Contracting States: DE FR GB IT SE

(71) Applicant: LUCAS INDUSTRIES PUBLIC LIMITED COMPANY Brueton House, New Road Solihull, West Midlands B91 3TX(GB)

(72) Inventor: Pratt, Ralph James

25 Cleveland Drive, Trenewydd Park
Risca Gwent, NP1 6RD Wales(GB)
Inventor: England, Michael John
20 Wintour Close
Cheptow Gwent, NP6 5LE Wales(GB)
Inventor: Griffiths, Alan Godfrey
39 Birmingham Road
Shenstone, Staffordshire, WS14 0JS(GB)

(74) Representative: Waite, Anthony William et al
MARKS & CLERK Alpha Tower Suffolk Street
Queensway
Birmingham B1 1TT(GB)

(54) Brake actuator.

(57) A brake actuator has a pair of linear force transmission assemblies (9) arranged to transmit brake-applying force from a primary power source to a brake friction element (2), each assembly incorporating an automatic adjuster (16). The assemblies (9) are actuated from the power source by a single force-applying lever (11) acting by way of a single force input member in the form of a balance beam (12) which actuates both assemblies.

FIG 1

This invention relates to a brake actuator, primarily for use in providing a parking brake facility in a disc brake and being of the general kind in which a force transmission assembly is arranged to transmit brake-applying force from a primary power source to a brake friction element, such assembly including a strut of which the length is varied automatically, in response to excessive wear of the friction element in order to set a new adjusted position of the latter. The actuator may also include a hydraulically actuated service brake piston.

There can be a requirement in trucks and other heavy commercial vehicles for the parking brake facility to act on only a single axle of the vehicle. The actuator and its associated adjuster mechanism must then sustain the entire vehicle load during parking and, in order to deal with this, the actuator and adjuster components need to have a size and strength which is disproportionately great in relation to normal braking requirements, sometimes leading to difficulties in installing the actuator due to lack of space at the relevant location. In other instances more than one brake assembly may be used on the same disc but this has the disadvantage of increased cost and weight.

It has been proposed to provide an actuator which has two force-transmission assemblies, each with its associated adjuster, the assemblies being actuated from a common air cylinder by way of a pair of levers, of which the free ends perform a pivotal camming action on the respective force-transmission assemblies for actuating the brake. This arrangement can produce side loads on the assemblies, leading to an imbalance of forces and premature wear of the respective actuator components.

An object of the present invention is to provide a brake actuator of the aforesaid general kind in which the aforesaid problems are alleviated or avoided.

According to the present invention, a brake actuator of the aforesaid general kind has a plurality of linear force transmission assemblies each incorporating an automatic adjuster and actuated from a primary power source by a single force-applying lever acting by way of a single force-input member which actuates both assemblies.

Each adjuster preferably includes a pair of threadedly interengaged adjuster members, one of which in each adjuster is held against rotation for normal adjuster operation by releasable means disposed adjacent one end of the adjuster housing, release of said means freeing said one member for rotation to permit wind back of the adjuster.

The single force input member conveniently acts on the assemblies by way of respective slipper devices having sliding contact with the latter.

In one convenient arrangement, said one of the adjuster members, is associated with releasable means which is releasably secured to the housing and normally prevents rotation of the adjuster member.

The invention will now be described, by way of example, with reference to the accompanying drawings in which:-

Figure 1 is a part cross-sectional plan view of a vehicle disc brake incorporating one form of the actuator of the invention;

Figure 2 is a view along the line B-B of Figure 1 but excludes the carrier member;

Figure 3 is an enlarged perspective view of a component forming part of the actuator of the invention;

Figure 4 illustrates three alternative forms of locking formation on the adjuster shaft;

Figure 5 is a part cross-sectional plan view of part of an alternative form of the actuator of the invention, and

Figure 6 is a cross-section along the line A-A of Figure 5.

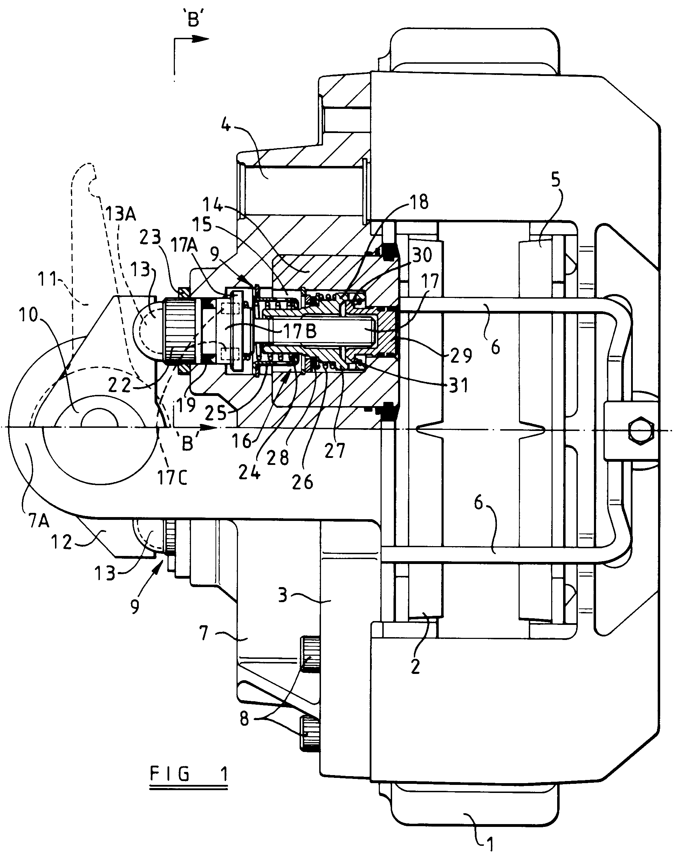

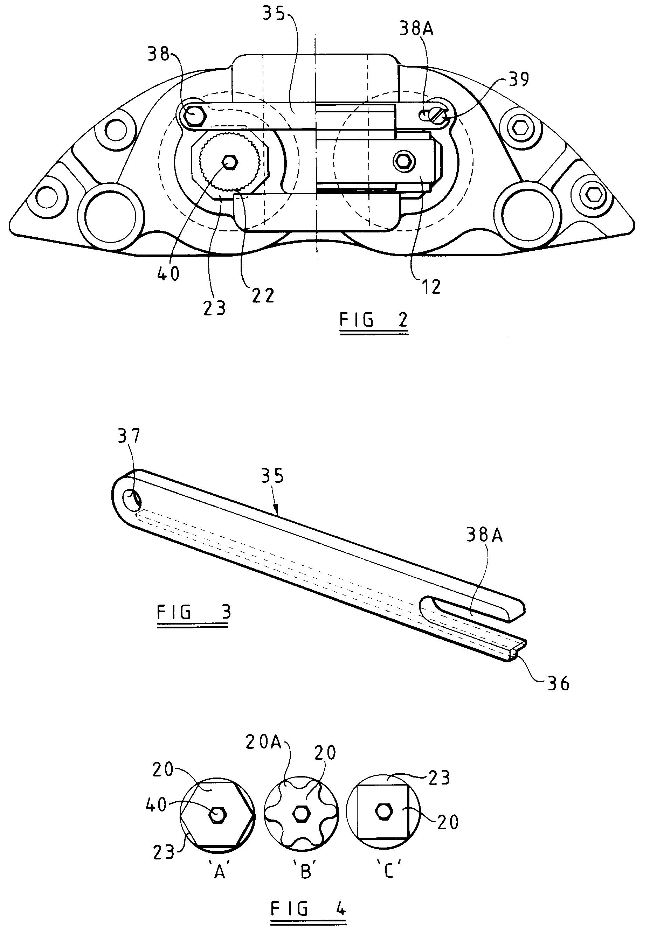

The disc brake illustrated in Figures 1 and 2 of the drawings includes a fixed carrier 1 intended to be secured, as by bolting for example to a fixed part of a vehicle in the vicinity of a wheel to be braked. The carrier 1 has a directly actuated brake pad assembly 2 slidably mounted therein and disposed at one side of a brake disc (not shown). A clamp member 3 is carried by guide pins, one of which can be seen at 4, for sliding movement relative to the carrier. The clamp member moves an indirectly actuated pad assembly 5 also mounted in the carrier 1 and disposed at the opposite side of the brake disc from the pad assembly 2, the pad assemblies 2 and 5 being supported for sliding movement in the fixed carrier 1 and being retained in the carrier by pins 6. An actuator housing 7 is bolted to the clamp member 3 by bolts 8 and houses a pair of identical linearly movable force transmission assemblies 9, only one of which is shown in detail and which will be described hereinafter. A cam 10 actuated by a lever 11 acts simultaneously upon the two force transmission members 9 by way of a balance beam 12 and a pair of slippers 13 engaged respectively with the assemblies 9. The lever 11 would typically be connected, in use to an air actuator or to a vehicle hand brake lever via suitable linkage. The brake would normally be actuated hydraulically by a pair of pistons 14 engaging the directly actuated pad assembly 2, under the action of hydraulic fluid introduced under pressure into respective chambers 15 by a master cylinder or similar device, in conventional manner.

Each force transmitting device 9 is provided with an automatic adjustment mechanism, indicated generally at 16, housed largely within the respective hollow piston 14. Each adjuster mechanism includes a threaded adjuster shaft 17 surrounded by and in reversibly threaded engagement with a nut member 18, the left hand end of the adjuster shaft, as seen in the drawing, being engaged by the slipper 13. The shaft carries a seal 19 adjacent this end which slides against the interior of the housing. Rotation of the shaft 17 is normally prevented by splines 22 thereon cooperating with a locking ring 23 which permits axial sliding movement of the shaft to permit actuation of the brake. The adjuster shaft 17 is urged leftwards by a spring 24 surrounding the shaft and contained within a cup-shaped abutment member 25 axially fixed within the housing, the spring acting between the member 25 and a large diameter flange 17A of the adjuster shaft. A further spring 26 surrounds the nut member 18 and acts between a radial flange 27 of the nut member and a low friction abutment washer 28 fixed with respect to the piston 14.

An auxiliary piston member 29 is mounted coaxially in the end wall of the piston 14 and sealed with respect to the latter. The inner end portion of the piston 29 is provided with a radially outwardly extending flange 30, between which and the nut member 18 is interposed a low friction bearing 31.

Mechanical operation of the actuator is effected by means of the lever 11, angular movement of which rotates the cam 10 causing axially inward movement of the balance beam 12 which, via the slippers 13 applies actuating force to the adjacent ends of the thrust transmitting assemblies 9 and via these assemblies onto the directly actuated pad 2 of the brake. The indirectly actuated pad is actuated by the aforesaid clamp member 3, as will be readily understood. The beam 12 engages in slots 13A in the slippers and the latter are freely engaged with the ends of the shafts 17 so that some lateral movement of the slippers is permitted, if necessary to assist in the balancing of the applied forces. The nut 18 is urged by the actuating force firmly into engagement with the adjacent inner end of the hollow piston 14 so that the nut is held against rotation and the adjuster will remain inactive during this mechanical operation of the brake.

When the actuator is operated hydraulically, by introduction of hydraulic fluid under pressure into the chamber 15, the piston 14 moves outwardly of the actuator body and applies the directly actuated friction pad against the disc, the other pad again being applied indirectly, as described above. The nut 18 moves with the piston relative to the adjuster shaft 17, which is loaded by the spring 24 in the direction opposite to that of the piston movement, a maximum running clearance being established by permitting a predetermined axial displacement to occur at the screw threaded connection between the shaft and nut, or at some other convenient location, as will be readily understood. When the brake pads are unworn, relative movement between the nut and adjuster shaft remains within the permitted axial displacement and the adjuster remains inoperative. However, as pad wear occurs, the piston 14 is required to move further in order to apply the pad to the disc and thereby creates a gap between the inner piston face and the adjacent end of the nut 18. Since the permitted axial displacement in the screw thread is now taken up, and because the screw member is prevented from rotating by the locking plate 23 and from axial movement by action of the spring 24, such further outward axial movement of the piston will have the effect of compressing the spring 26, causing the nut to rotate along the adjuster shaft under the influence of the spring 26 until the end of the nut member once again abuts the internal end of the piston. When the hydraulic pressure is relieved, the nut and piston are once more retained firmly in engagement at their abutting surfaces, thereby precluding rotation of the nut back along the adjuster shaft and thus maintaining the piston 14 in a new outwardly adjusted position.

The aforesaid adjusting action depends upon the ability of the spring 24 to prevent the adjuster shaft 17 from moving axially with the nut. For normal braking pressures, the pressure applied to the auxiliary piston 29 over the area defined by its portion sealing within the piston 14 normally creates insufficient force to overcome the spring 24 and the assembly operates as described above. In the event of excessively heavy braking occurring, which would lead to large deflections in the brake components for which compensating adjustment is not required, the force resulting from the braking pressure acting on the auxiliary piston 29 transmitted via the bearing 31, nut 18 and adjuster shaft 17 at these high braking loads is sufficient to compress the spring 24, enabling the adjuster shaft 17 to move with the nut, so that the adjuster can no longer operate and is rendered load-insensitive.

Although the adjuster shaft 17 is illustrated as a single item, it would alternatively be possible to use a two part shaft split so that the flange 17A forms part of the adjuster shaft 17 separate from the remainder 17B of the shaft to the left thereof. A releasable driving connection typically in the form of one or more pins, illustrated in dotted lines at 17C, or dogs acting between the locked shaft portion 17B and the flange 17A of the other shaft part would be necessary to ensure that the latter would normally be locked against rotation but may move axially away from the flange 17B during load insensitive operation of the adjuster.

Referring more particularly to Figures 2 and 3, the means for normally locking the adjuster shaft 17 against rotation can be seen in more detail. The locking plate 23, which meshes with the splines 22 of the adjuster shaft, is engaged by an elongate locking bar 35 of sufficient length to bridge between the two force transmission assemblies actuated by the balance beam 12. As can be seen more clearly from Figure 3, one edge of the bar is stepped over substantially the whole of its length to form a lateral flange 36. The locking bar is provided with a hole 37 at one end thereof to receive a fixing screw 38 which anchors it to the actuator housing adjacent one of the thrust assemblies. The other end of the bar is slotted at 38A to receive a screw 39 screwed into the housing adjacent the other thrust assembly. It will be seen that each locking ring in this embodiment is of generally octagonal form and the flange 36 overlaps an edge portion of each locking ring 23, so that the adjacent edge of the bar engages one side face of each ring to prevent rotation of the ring and thereby of the shafts. When the bolt 38 and screw 39 are tightened, the locking bar also retains the rings axially by way of the aforesaid overlapping flange 36.

When it is necessary to de-adjust the adjuster manually from a brakes-worn condition, in order to service the brake for example, this may be effected by removing the bolt 38 and releasing the screw 39, enabling the locking bar 35 to be slid longitudinally off the screw and removed. This leaves the locking plates 23 and the meshing adjuster shafts without rotational restraint, so that, by insertion of a suitably shaped tool through an opening in the balance beam 12 and slipper 13 and into an opening 40 formed in the end of the adjuster shaft, the latter may be rotated against the action of the spring 24 in a direction such as to wind the nut 18 away from the piston 14, enabling the piston to be retracted by an amount sufficient to perform a servicing operation on the brake, such as removal and replacement of the friction elements 2, 5.

Figure 4 illustrates three alternative formations which may be applied to the end of the adjuster shaft which cooperates with the locking plate 23. In Figure 4A, the end of the shaft 17 is provided with a hexagonal formation for cooperation with a complementary internal formation within the locking plate 23. In the example of Figure 4B, the end of the shaft 20 is provided with a succession of rounded teeth 20A, the locking ring having complementary internal grooves. In the embodiment of Figure 4C, the end of the shaft 20 is square and a complementary square recess is formed in the locking ring 23.

It would be possible to dispense with the locking rings and for the locking bar to cooperate with suitable formations on the shafts directly for anti-rotational and axial locking.

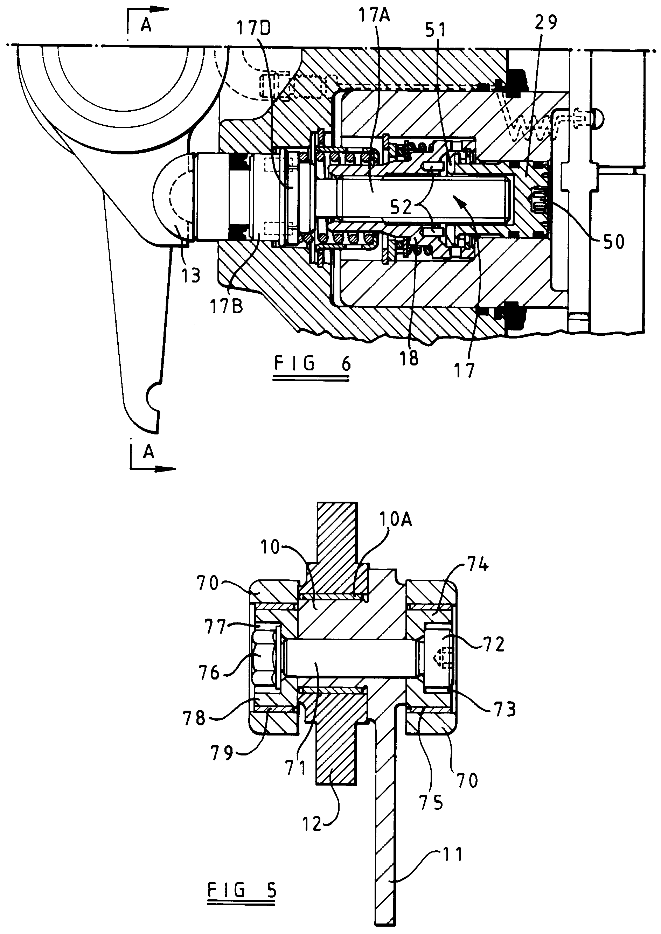

It can be seen rom Figure 5 that the actuating lever 11 is integral with the cam 10 and the latter is rotatably mounted in a bearing 10A within the balance beam 12. The cam and lever assembly is retained between lugs 70 of the actuator housing by a bolt 71, a head 72 of which is received within a recess 73 of a trunnion 74 rotatable in a bearing 75 within the lug. A clamping nut 76 screwed on to the bolt is housed in a recess 77 of a further trunnion 78 rotatable in a bearing 79 in the other lug 70. Rotation of the lever in one direction causes the cam to move the balance beam 12 in a direction to actuate the brake, and vice versa.

In the slightly modified actuator illustrated in Figure 6 the reference numerals of Figure 1 will be used where applicable on corresponding parts. The adjuster shaft is formed in two parts 17A, 17B and the shaft part 17A is prevented from rotation but permitted to move axially by providing it with ears 17D engaging in internal grooves of the housing. With this arrangement, the splines 22 are omitted from the shaft parts 17B which are engaged by the slippers 13 and the locking plates 23 are also no longer necessary. The shaft parts 17A, 17B may be interconnected by pins such as illustrated at 17C in the previous embodiment, or dogs, if required.

The bar 35 and locking plates 23 used in the Figure 1 embodiment for releasably holding the adjuster shaft against rotation are omitted in the present arrangement and de-adjustment is effected from the inner end of the shaft using the auxiliary piston 29. For this purpose, the piston 29 is provided at its outermost end with a formation 50 for reception of a complementary tool to enable the piston to be rotated. The innermost end of the piston is provided with teeth 51 or similar formations and these are in opposed relationship with pins 52 projecting from an opposing face of the nut member 18. De-adjustment of the adjuster is effected, after removal of the adjacent brake pad 2, by inserting the tool into the formation 50, pushing the piston 29 inwardly to bring the teeth 51 into engagement with the pins 51 and rotating the piston in the appropriate direction to wind back the nut along the adjuster shaft.

Whilst the invention has been described in relation to a disc brake which is actuated hydraulically for service brake operation, the invention could equally be applied to a brake of similar construction which is wholly mechanically/pneumatically operated.

## Claims

1. A brake actuator comprising a plurality of linear force transmission assemblies (9) each incorporating an automatic adjuster (16) and actuated from a primary power source, characterised in that said actuation is effected by a single force-applying lever (11) acting by way of a single force input member (12) which actuates both assemblies (9).

2. An actuator according to Claim 1, characterised in that the single input member is in the form of a balance beam (12) of which spaced portions respectively actuate the force transmission assemblies (9), said lever (11) acting on the input member (12) at a location disposed between said spaced portions.

3. An actuator according to Claim 1 or Claim 2, characterised in that the single input member (12) acts on the assemblies by way of respective slipper devices (13) having sliding contact with the latter.

4. An actuator according to any one of the preceding claims, characterised in that the force-applying lever (11) acts on the input member (12) by way of a cam (10).

5. An actuator according to Claim 4, characterised in that the cam (10) is attached to the lever (11) and rotates within an opening formed in the input member (12) such that rotation of the lever causes linear actuating movement of the input member.

6. An actuator according to Claim 4 or Claim 5, characterised in that the cam is secured to trunnions (74, 78) disposed respectively at either side thereof and rotatably mounted in bearings (75, 79) carried by fixed structure.

7. An actuator according to any one of the preceding claims, characterised in that each adjuster (16) includes a pair of threadedly interengaged adjuster members (17, 18), one (17) of which in each adjuster is held against rotation for normal adjuster operation by releasable means (35) disposed adjacent one end of the adjuster housing, release of said means freeing said one member (17) for rotation to permit wind back of the adjuster.

8. An actuator according to Claim 7, characterised in that said one (17) of the adjuster members projects from the actuator housing for engagement with the single input member and with the releasable means (35) which is releasably secured to the housing and normally prevents rotation of the adjuster member.

9. An actuator according to any one of the preceding claims, characterised in that the actuator incorporates a hydraulically operated piston (14) for service braking.

10. An actuator according to Claim 9, characterised in that an auxiliary piston (29) is mounted in the service brake piston (14) and subject to hydraulic pressure over a smaller area than the latter, the arrangement being such that, at a predetermined braking pressure the force generated on the auxiliary piston is sufficient and so directed as to overcome means normally preventing relative movement between the adjuster members (17, 18), such that the adjuster is rendered inoperative and thereby load-insensitive.

11. An actuator according to Claim 9 or Claim 10, characterised in that the auxiliary piston (29) and adjacent adjuster member (18) are provided with respective formations (51, 52) which may be engaged by pushing the auxiliary piston inwardly, the auxiliary piston being adapted for engagement by a tool enabling it to be rotated with said formations engaged in order to wind back the adjuster.

F I G 1

FIG 2

FIG 3

FIG 4

FIG 6

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 403 320 (AIRHEART PRODUCTS, INC.)<br>* the whole document *<br>--- | 1,2 | F16D65/16<br>F16D65/56<br>F16D55/227 |
| A | GB-A-1 566 353 (WAGNER ELECTRIC CORPORATION)<br>* the whole document *<br>--- | 1 | |
| A | GB-A-1 492 784 (GIRLING LIMITED)<br>* the whole document *<br>--- | 1 | |
| A | GB-A-1 595 492 (GIRLING LIMITED)<br>* the whole document *<br>--- | 1 | |
| A | EP-A-0 154 398 (LUCAS INDUSTRIES PUBLIC LIMITED COMPANY)<br>* the whole document *<br>--- | 9-11 | |
| A | DE-A-3 608 986 (ALFRED TEVES GMBH)<br>* figure *<br>--- | 1 | |
| A | GB-A-1 548 214 (ROCKWELL INTERNATIONAL CORPORATION)<br>* figures 1-5 * | 1 | TECHNICAL FIELDS SEARCHED (Int. Cl.5 )<br><br>F16D |

-----

The present search report has been drawn up for all claims

| Place of search | Date of completion of the search | Examiner |
|---|---|---|
| THE HAGUE | 27 APRIL 1992 | BRAEMS C.G.I. |